# EUROPÄISCHE PATENTANMELDUNG

(11) **EP 0 812 094 A1**
(43) Veröffentlichungstag der Anmeldung: **10.12.1997**
(21) Anmeldenummer: 97108673.1
(22) Anmeldetag: 30.05.1997
(51) Int. Cl.: H04M 1/00, G09B 21/00

(54) **Telekommunikationsendegerät**

(30) Priorität: 07.06.1996 DE 19622729
(71) Anmelder: Deutsche Telekom AG, 53113 Bonn (DE)
(72) Erfinder: Kluth, Helmut, Dipl.-Ing., 53175 Bonn (DE)

(57) **Zusammenfassung**

Kartentelefone bzw. Automaten mit Anzeigevorrichtungen, insbesondere LCD-Anzeigevorrichtungen (3) haben den Nachteil, daß sie die Anzeige zum Beispiel eines aktuellen Guthabens, das auf einer Chipkarte gespeichert ist, bei schlechten Sichtverhältnissen oder für Sehbehinderte bzw. blinde Personen unmöglich machen. Die Benutzung von Kartentelefonen bei Sehbehinderung oder Erblindung ist deshalb stark eingeschränkt. Mit der vorliegenden Lösung, die die anzuzeigenden Werte auch akustisch eindeutig wahrnehmbar macht, ist eine uneingeschränkte Nutzung der Kartentelefone bzw. ähnlicher Telekommunikationsendgeräte insbesondere durch die genannten Personengruppen jetzt uneingschränkt möglich. Die Signalisierung geschieht mittels unterschiedlich langer Töne, die von einem Coder (4) über einen Ton-Generator (5) und einen Lautsprecher (6) ausgegeben werden. Durch das Ersetzen des Coders (4) durch ein handelsübliches Sprachmodul ist auch die direkte Sprachausgabe am Kartentelefon oder dergleichen realisierbar.

## Beschreibung

Die Erfindung betrifft ein Telekommunikationsendgerät oder ähnliches Gerät mit Magnet- oder Chipkartenleser nach dem Oberbegriff des Patentanspruchs 1.

Die heute bekannten Telekommunikationsendgeräte haben größtenteils keine oder nur eine sehr eingeschränkte Möglichkeit der Rückmeldung der Eingaben des Bedieners. So ist es zum Beispiel bei handelsüblichen Telefonen bekannt, daß die über eine Tastatur oder Chipkarten oder Sprache eingegebenen Ziffern oder Buchstaben auf einer kleinen Anzeigeeinrichtung so angezeigt werden, wie sie eingegeben werden. Je nach Größe der vorhandenen Anzeigevorrichtung, die zum Beispiel direkt im Telefonhörer unter- oder oberhalb der Tastatur integriert sein kann, ist die Lesbarkeit der eingegebenen Zeichen auf der Anzeigevorrichtung nicht bei allen Gegebenheiten, insbesondere Lichtbedingungen sicher und ohne weiteres möglich. Dies ist insbesondere dann von großem Nachteil, wenn es sich bei den angezeigten Daten- bzw. Informationen um Kontostände von Telefonkarten oder sonstigen Chipkarten bzw. Automatenkarten oder elektronischen Geldbörsen handelt.

Es ist außerdem bekannt, daß neben der Anzeige der eingegebenen Rufnummern und auch eventuell aktivierter Leistungsmerkmale des Telekommunikationsendgerätes jeder eingegebenen Ziffer bzw. jedem eingegebenen Zeichen ein bestimmter Ton oder eine Tonfolge zugeordnet ist, die die erfolgreiche Bedienung anzeigt bzw. quittiert. Auch im Einsatz befindliche Verkehrsampeln geben charakteristische Tonfolgen für Blinde ab, die den entsprechenden Schaltzuständen der Ampel zugeordnet sind. Einzeltöne bzw. derartige Tonfolgen haben jedoch den Nachteil, daß damit nicht die tatsächlich eingegebene Rufnummer bzw. das eingegebene Zeichen oder gar der Kontostand erkannt werden kann.

Der Erfindung liegt deshalb die Aufgabe zugrunde, ein Telekommunikationsendgerät mit einer Einrichtung auszustatten, die es ermöglicht, daß der Benutzer, insbesondere eine durch Sehschwäche oder Erblindung behinderte Person von Telekommunikationsendgeräten mit Chipkartenleser oder ähnlichen Geräten auch ohne einen Blick auf eine Anzeige den aktuellen Wert der Chipkarte oder den Kontostand sicher und unverwechselbar erkennen kann.

Die erfindungsgemäße Lösung der Aufgabe ist im Kennzeichen des Patentanspruchs 1 charakterisiert.

Weitere Lösungen und Ausgestaltungen der erfindungsgemäßen Lösung sind in den Kennzeichen der Patentansprüche 2 bis 6 charakterisiert.

Durch die erfindungsgemäße Lösung werden zum Beispiel die Kartentelefone für Sehbehinderte oder erblindete Personen nutzbar gemacht, da diese nun durch die Codierung der Töne bzw. Tonfolgen, die den Ziffern bzw. Buchstaben zugeordnet sind, auch für diesen Personenkreis erkennbar werden. In einer erweiterten Anwendungsform der codierten Töne bzw. Tonfolgen ist auch eine akustische Unterstützung bei der Bedienung von Automaten jeder Art, wie zum Beispiel Geldautomaten, möglich.

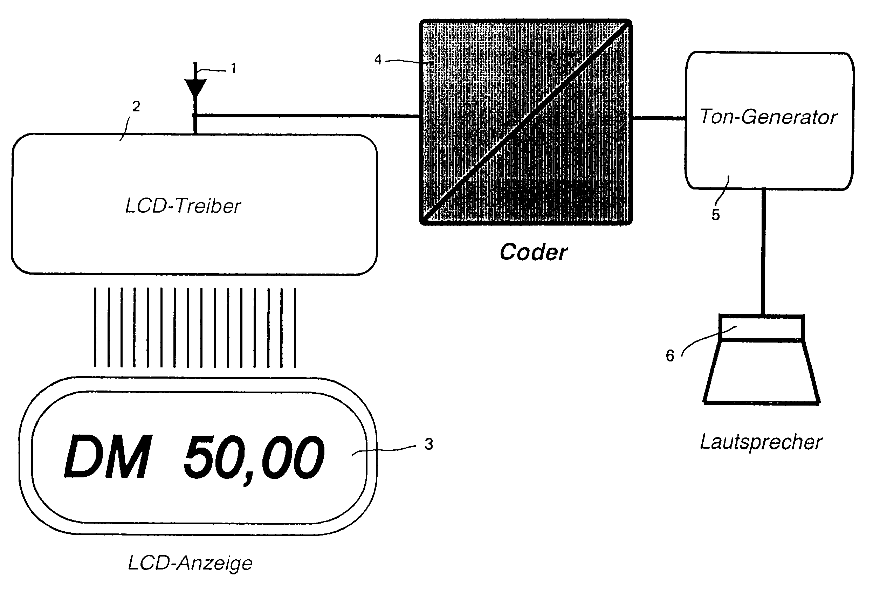

Die Erfindung wird nun anhand eines in der Zeichnung dargestellten Ausführungsbeispiels näher beschrieben.

In der Zeichnung, in der Beschreibung und in den Patentansprüchen sowie in der Zusammenfassung werden die folgenden Bezugszeichen und entsprechenden Begriffe verwendet.
1 Eingang für die Anzeige der gewünschten Informationen oder Daten
2 LCD-Treiber
3 LCD-Anzeige
4 Coder
5 Ton-Generator
6 Lautsprecher

Die in der Zeichnung dargestellte Prinzipschaltung dient dazu, vorhandene Kartentelefone mit Kartenlesern oder ähnliche Telekommunikationsendgeräte bzw. Automaten so zu modifizieren, daß akustisch der in einer Chipkarte oder dergleichen gespeicherte Wert vor, während und nach dem Telefongespräch signalisiert wird. Dies erfolgt zum Beispiel dadurch, daß kurze und lange Töne in einem entsprechenden Code den Ziffern zugeordnet werden, die dann hörbar und/oder visuell ausgegeben werden. Diese Schaltung besteht aus dem Eingang 1 für die Anzeige der gewünschten Ziffern, Daten bzw. Informationen, der zur Sichtbarmachung der Zeichen mit LCD-Treibern 2 verbunden ist, die ihrerseits eine LCD-Anzeige 3 mit der entsprechenden Spannung bzw. dem entsprechenden Strom versorgen. Darüberhinaus ist der Eingang 1 mit einem Coder 4 verbunden, der zur Umwandlung der Eingangssignale in akustische Signale dient und deshalb mit einem Ton-Generator 5 verbunden ist, dessen Ausgang wiederum mit einem Lautsprecher 6 verbunden ist, über den die akustisch anzuzeigenden Größen ausgegeben werden.

Wie bereits erwähnt, kann dies dadurch erfolgen, daß kurze und lange Töne den einzelnen Zeichen zugeordnet werden, die dann der Lautsprecher 6 aussendet oder es kann auch eine Sprachausgabe des jeweils gewünschten Wertes durch Einsetzen eines entsprechenden Moduls anstelle des Coders 4 bzw. des Ton-Generators 5 über den Lautsprecher 6 realisiert werden. Die Signalisierung mittels unterschiedlich langer Töne stellt die technisch einfachste Lösung dar, da bereits Tongeber in handelsüblichen Kartentelefonen und sonstigen Telekommunikationsendgeräten vorhanden sind. Die von einer Chipkarte im Kartentelefon gelesene Gebühreninformation muß dann nur noch mittels Coder 4 dem Lautsprecher 6 übertragen werden.

Bei der Signalisierung durch Töne ist die Anwendung des Morsecodes oder eines anderen Codes, bei dem kurze und lange Töne den Ziffern bzw. Dezimalstellen zugeordnet werden, eine alternative technische Lösung. Es wird nachfolgend ein Beispiel für die Zuordnung langer und kurzer Töne angegeben:
Beginn der Signalisierung: Dreimal langer Ton
   Pause
Erste Ziffer (Zehner): Kurze Töne
   Pause
Zweite Ziffer (Einer): Kurze Töne
   Pause
Dezimalkomma: Lang-Kurz-Lang Ton
   Pause
Erste Dezimalstelle: Kurze Töne
   Pause
Zweite Dezimalstelle: Kurze Töne
   Pause
Ende der Signalisierung: Dreimal langer Ton

Eine Null kann durch zwei lange Töne dargestellt werden. Es wird nun ein Beispiel angegeben, wie es auch in der Zeichnung zu sehen ist.
a) Annahme: Der Wert der Chipkarte beträgt DM 50,00. Ein langer Ton wird durch einen Strich, ein kurzer Ton durch einen Punkt dargestellt.
   Dann ertönt folgendes Signal: ---.....-- -.- -- -- ---
b) Weiteres Beispiel:
   Annahme: Guthaben ist DM 0,84:
   --- -- -.- ........ ..... ---

Der jeweilige Wert wird zu Beginn und zum Ende der Verbindung signalisiert. Während der Verbindung erinnert zum Beispiel ein kurzer Ton bei jedem Zählimpuls an die Entwertung um eine Einheit.

Besonders Sehbehinderte und Blinde sind in der akustischen Wahrnehmung und Deutung geschult und werden eine solche akustische Hilfe schnell erlernen. Die Geschwindigkeit die bei der Übertragung der Zeichen als vorteilhaft angesehen wird, liegt zwischen 20 bis 30 Zeichen pro Minute. Als Chipkarten gelten alle Speicher- oder Mikroprozessorchipkarten und deren technische Modifikationen.

## Patentansprüche

1. Telekommunikationsendgerät oder ähnliches Gerät mit Magnet- oder Chipkartenleser, Tastatur und Anzeige, wie Kartentelefon, dadurch gekennzeichnet,
daß am Eingang (1) für die anzuzeigenden wertedarstellenden Signale ein Coder (4) zur Codierung in akustische Signale angeordnet ist, der die eingehenden Signale in akustisch wahrnehmbare Signale umwandelt und an einen mit seinem Ausgang verbundenen Lautsprecher (6) abgibt.

2. Telekommunikationsendgerät oder ähnliches Gerät nach Patentanspruch 1, dadurch gekennzeichnet,
daß der Coder (4) einen vom Kartenlesegerät des Telekommunikationsendgeräts gelesenen Wert, der in einer Chipkarte gespeichert ist, in den einzelnen Ziffern zugeordnete kurze bzw. lange Töne umwandelt und über einen angeschlossenen Ton-Generator (5) auf den Lautsprecher (6) an den Benutzer ausgibt.

3. Telekommunikationsendgerät oder ähnliches Gerät nach einem der Patentansprüche 1 oder 2, dadurch gekennzeichnet,
daß die Signalisierung mittels unterschiedlicher langer Töne durch den in einem Kartentelefon oder dergleichen bereits vorhandenen Tongeber vorgenommen wird.

4. Telekommunikationsendgerät oder ähnliches Gerät nach einem der Patentansprüche 1 bis 3, dadurch gekennzeichnet,
daß bei der Signalisierung durch Töne den einzelnen Ziffern bzw. Dezimalstellen kurze und lange Töne zugeordnet werden, indem bekannte Verschlüsselungen angewendet werden, wie zum Beispiel der Morsecode.

5. Telekommunikationsendgerät oder ähnliches Gerät nach einem der Patentansprüche 1 bis 4, dadurch gekennzeichnet,
daß der Coder (4) auf/durch ein Sprachausgabemodul mit oder ohne Ton-Generator (5) zwecks Sprachausgabe umschaltbar oder austauschbar angeordnet ist.

6. Telekommunikationsendgerät oder ähnliches Gerät nach einem der Patentansprüche 1 bis 5, dadurch gekennzeichnet,
daß der jeweilige Wert zu Beginn und zum Ende der Verbindung signalisiert wird und
daß während der Verbindung ein kurzes bestimmtes Tonsignal bei jedem Zählimpuls dem Benutzer die Entwertung um eine Einheit anzeigt.
